# EUROPEAN PATENT SPECIFICATION

(11) **EP 1 840 514 B1**
(45) Date of publication and mention of the grant of the patent: **03.12.2008**
(21) Application number: 06006441.7
(22) Date of filing: 28.03.2006
(51) Int. Cl.: G01C 21/28, G09B 29/00

(54) **Storage and visualising of interest in a navigation system**
Speicherung und interessensbezogene Ansicht in einem Navigationssystem
Stockage et visualisation d'intérêt dans un système de navigation

(43) Date of publication of application: 03.10.2007
(73) Proprietor: Harman Becker Automotive Systems GmbH, 76307 Karlsbad (DE)
(72) Inventor: Mauderer, Hans Peter c/o HarmanBecker, 76307 Karlsbad (DE)
(74) Representative: Grünecker, Kinkeldey, Stockmair & Schwanhäusser Anwaltssozietät

(56) References cited:
- EP-A- 1 102 037
- EP-A- 1 480 011
- US-A1- 2004 078 813
- US-B1- 6 321 158
- US-B1- 6 587 782

## Description

### Field of Invention

The present invention relates to route guidance by a navigation system and a navigation system for a vehicle. In particular, it relates to route guidance including the presentation of points of interest along the route.

### Prior Art

Nowadays navigation systems have become standard equipment for upper class vehicles. Usually such systems receive GPS (Global Positioning System) - satellite radio signals. These radio signals are received by a GPS antenna of the vehicle and are provided to a navigation computer in the vehicle. This computer processes the received data and furthermore data obtained by motion sensors, as wheel sensors and gyroscopes, and thus, determines the present position of the vehicle.

Known navigation systems typically use electronic maps to represent cartographic features, as streets, buildings and rivers, and make use of a medium such as a compact disk or a digital video disc to store the data that relates to the cartographic features. After map matching the present position of the user is indicated in the digital map. By acoustic and/or visualized information the user is guided to the predetermined destination.

Some navigation systems are able to display detailed digital maps and/or three-dimensional detailed views indicating routes to predetermined destinations, the types of manoeuvres to be taken at various locations as junctions as well as different kinds of points of interest (POI) as, for example, gas stations, hotels or restaurants and also landmarks.

In order to provide the navigation functions navigation systems make use of one or more detailed databases that may comprise bitmap images for lanes, sign post information, landmarks etc. and data which, e.g., represent physical features of a geographic region and points of interest.

However, by present navigation systems the driver is provided with standardized non-individual information only. For particular navigation systems particular software is available designed for the majority of users. This software cannot be manipulated by the users and, therefore, cannot be adapted to the individual needs of the users. There is, thus, some need for navigation systems that can be individually customized. The acceptance of navigation systems and the comfort of using them could thereby significantly be improved.

US -A- 6 587 782 discloses discloses guidance about making stops at locations at the convenience of the user and a method for providing reminders about points of interest according to which a user can specify the type of a point of interest and receives reminders on the specified point of interest. An interface is provided in order to request for a route or other kinds of information. Points of interest data are stored in a database. When the user is close to a previously specified point of interest, he is reminded on this point of interest.

EP -A- 1 480 011 discloses the indication of visitation points within the actual range of a vehicle position and a point of interest alert or a point of interest previously selected by a user. The user can select a specific point of interest from a class of point of interests or a subset of visitation points

EP -A- 1 102 037 discloses the simultaneous display of a map and a selection list including points of interest. The user can select a class points of interest or a point of interest from a list. The selected point of interest is immediately displayed in a map. Alternatively, points of interest of the previously selected class are displayed in the map

It is therefore a problem underlying the present invention to provide a navigation system providing route guidance that can be adapted to the needs and preferences of an individual user.

### Description of the Invention

The above-mentioned problem is solved by a navigation system of claim 1, comprising a location means configured to determine an actual position, i.e. a position at which the navigation system is presently located, a database and an input means configured to store the actual position determined by the location means and to assign at least one class of points of interest and/or at least one point of interest to the actual position and to store the at least one class of points of interest and/or at least one point of interest assigned to the stored actual position in the database. The navigation system further comprises an output means configured to output the stored actual position and/or the stored at least one class of points of interest and/or at least one point of interest related to the stored actual position.

The actual position can be stored by storing coordinates (geographic or arbitrary relative coordinates of a digital map, e.g.) of the actual position. The at least one class of points of interest and/or at least one point of interest may be related to the stored actual position in that is located at the stored actual position.

The navigation system may be a handheld one or, preferably, a navigation system installed in a vehicle, as an automobile, motorcycle, ship, airplane. The database may be a database already including part or all of the data used for route guidance and configured so that it can be updated, e.g., after being purchased by a user. Alternatively, the database can be a supplementary database that can be used together with a database including sufficient data to perform route guidance. Both kinds of databases can physically be carried by magnetic or optical storage media.

The output means may output the stored actual position and the stored at least one class of points of interest and/or at least one point of interest related to the actual position according to the stored coordinates in different ways, e.g., by displaying a symbol for a (class of a POI) at the appropriate position in a digital map (see also discussion below). The stored actual position may be output by means of an indication of relative distance of a second position to the stored actual position. The second position may be a present position of a vehicle that travels a route already traveled before in a first travel during which the actual position was stored. The stored actual position and/or the stored at least one class of points of interest and/or at least one point of interest related to the stored actual position may be output during route guidance or route planning before the route to a selected destination is calculated and/or indicated.

Due to the input means the database can be updated by actual positions determined by the location means and by relating a class of points of interest and/or a point of interest to the actual position. Examples for classes of points of interest are hotels, restaurants, service stations, police stations, etc. Points of interest may belong to a defined class. However, it might be possible to store a newly defined point of interest that presently does not belong to any pre-defined class. The user also may be enabled to define a new class of POls. For example, a user may define a class of POls representing a particular kind of stores. The symbol indicating stores may be designed by the user himself. Thus, a user can adapt by and by a navigation system according to his individual needs and preferences.

If installed in a vehicle, input means of the claimed navigation system can be operated by a driver or another user. In general, the input means may comprise a haptic or acoustic input means configured to enable a user to initiate storing of (the coordinates of) the actual position and/or to select at least one class of points of interest and/or at least one point of interest related to the actual position. Here, selection of a class of points of interest and/or at least one point of interest related to the actual position implies assignment of data representing the actual position, coordinate data, and data representing at least one class of points of interest and/or at least one point of interest.

If during the travel the driver, e.g., realizes something that might be of interest when the same route will at least partly be traveled again in the future, he can initiate that the input means stores the present position that is determined by the location means included in the navigation system in the database. The driver/user also may operate the input means, e.g., by a switch or cursor or by voice input, to assign a class of POls, e.g., hotels, restaurants, service stations, to the determined and stored actual position. After the travel the driver may specify the assigned class and may, e.g., type-in by means of a keyboard connected to the navigation system a text giving details for the chosen class of POls. Thereby, information as, e.g., "Restaurant" (Class of POI) - the coordinates of the service station in a digital map (actual position) and "Italian Restaurant; Probably Upmarket" (POI specified with individual text) may be stored in the database.

The navigation system of the present invention may comprise an speech recognition means that is configured to detect a speech input and to cause the input means to store the coordinates of the actual position and at least one class of points of interest and/or at least one point of interest related to the actual position in the database, if a particular speech input is detected. The particular speech input can be a predefined watchword. The watchword can be pre-defined and recorded by a user, in particular, may be a watchword spoken and recorded by a user.

If, e.g., a driver utters "Store Hotel", the system may be configured such that the actual position and 'hotels' as the class of POIs related to the actual position are stored in the database. 'Hotels' as the class of POIs may be stored related to the actual position by generating a link from the data representing the coordinates of the actual position and data representing the above-mentioned class. The speech recognition system may be activated by a push-to-talk lever.

The output means included in the disclosed navigation system can be configured to output the stored actual position and the stored at least one class of points of interest and/or at least one point of interest related to the actual position by displaying a symbol for a class of points of interest or of a point of interest in a digital map at a position given by the stored coordinates. The symbol can be easily recognized by a user inspecting the digital map. The symbol may be displayed highlighted or even as a blinking symbol.

According to one embodiment the claimed navigation system may comprise a symbol database that is configured to store symbols for classes of POIs and symbols for POIs and the database may be a separate one or part of the same database as mentioned above. In particular, the symbol database may be configured to be amended by a user. The user may, e.g., assign text to a symbol representing, e.g., a restaurant. On the other hand, a symbol itself may be a text consisting of letters.

Symbols may also comprise digital photographs or bitmaps or vector graphics. Whereas bit-mapped images consist of rows and columns of dots, vector graphics are represented as mathematical formulas that define all the shapes in an image. Vector graphics are based on mathematical functions and they are scalable, not restricted to rectangular shapes and transparent. Moreover, vector graphics require less disk space than bitmaps, since they can be calculated from relatively few data points that have to be stored. Thus, vector graphics can particularly suitably be used for calculating and displaying 3-dimensional symbols.

It is preferred that the inventive system may provide the possibility that new symbols may be added to the symbol database and that previously stored symbols can be deleted or modified. Thus, the claimed navigation system may comprise a symbol database storing at least one symbol for at least one class of points of interest and/or at least one point of interest and configured to be amended by insertion of a new symbol and deletion/modification of a stored symbol and wherein the output means is configured to output the stored at least one class of points of interest and/or at least one point of interest by means of the least one symbol stored in the symbol database.

Such new symbols may be created by a user himself or obtained from a provider. It is envisaged that new symbols may be downloaded, e.g., via the Internet, by the user and subsequently stored in the symbol database of the inventive navigation system.

The output means may comprise an acoustic output, preferably, a speech output, and can be configured to output a message, preferably a verbal message previously recorded by a user, concerning the POI (or class of POIs) related to the position and optionally concerning the stored position itself. In particular, the verbal message may be spoken and recorded by a user.

In a specific example, when the driver travels again a route he previously had traveled, a message may be given in form of the verbal announcement "Italian restaurant - 200 meters - on the right", if the driver has adapted the used navigation system in accordance with the present invention. In this case, the stored actual position is output by the output means in form of the verbal message "200 meters - on the right" making use of both the present position during the second travel and the (previously actual) position stored during the first travel. Thus, the output means may be configured to output information containing the stored information but also on the basis of a new present position when traveling an already traveled route. In the above example the input means might have been used to store the output message, e.g., the user has uttered the message to be announced and the utterance was detected by a voice input means. Thereby, an individually customized message can be output.

The output means included in the navigation system according to the present invention may be configured to output the stored actual position and/or the stored at least one class of points of interest and/or at least one point of interest related to the stored actual position, only if the navigation system is within a predetermined distance from the stored actual position. The navigation system, thus, may comprise a means to determine the distance from the present position to the stored actual position. At the time of storage of actual position, the present position of the vehicle is substantially the same position as the stored actual position.

Consider a case in which a route is traveled for the first time. At an actual position the user initiates that the coordinates of actual position and, e.g., a POI related to this position are stored in the database. The concept for assigning the coordinates, that may be any kind of suitable coordinates, and the POI may be any concept known in the art to relate different kinds of data to each other including the usage of pointers and/or multidimensional arrays. Links from entries of a predefined or user-defined library, as symbols, to a library containing stored postional data (coordinates) may be defined and managed. When subsequently the route is traveled at least partly once again, at a predetermined distance only, which might be chosen by the user, the POI and the position of the POI are indicated to the user, e.g., by means of displaying or acoustically announcing a corresponding message or by displaying the corresponding symbol at the respective place in a digital map displayed to the user.

According to another embodiment the input means of the inventive navigation system can be configured to store an arbitrary position, in particular, the coordinates of an arbitrary position, and at least one class of points of interest and/or at least one point of interest related to the arbitrary position in the database and the output means of the inventive navigation system can be configured to output the stored arbitrary position and the stored at least one class of points of interest and/or at least one point of interest related to the stored arbitrary position.

Accordingly, the user is not restricted to customize the navigation system on a present/actual position basis but may also initiate storing of the coordinates of an arbitrary position and at least one class of points of interest and/or at least one point of interest related to the arbitrary position at any time. The user may, e.g., select a symbol by means of a cursor means and drag-and-drop it to a desired position in a digital map.

In order to solve the above mentioned problem, the present invention also provides a method for route guidance, comprising the steps: indicating a route to a predetermined destination, indicating at least one stored class of points of interest and/or at least one stored point of interest wherein the at least one class of points of interest and/or the at least one point of interest have been assigned to and stored at least one position of the route during a previous travel along the route or for a position, e.g., after or during a previous travel. The class of POls or the POI has been stored together with coordinates of the respective position. Coordinates may be geographic or arbitrary coordinates.

The at least one stored position can, in particular, be an actual position of a vehicle during the previous travel, i.e. a present position of the vehicle at a given time. However, a POI or a class of POIs can also be stored for an arbitrary position, in particular, along the route. Indication of the route as well as the at least one class of points of interest and/or the at least one point of interest can be performed acoustically and/or visually by means of a digital map or some graphic representation of the route, in general.

Thus, the inventive method may comprise two stages, in principle:
1) Basically conventional route guidance during a travel of a route at a first time during which, however, POls along the route are introduced by a user on demand by storing an actual position and assigning a POI, e.g. represented by a symbol to be displayed in a digital map, to this actual position.
2) Route guidance at least partly along the same route at a second time and indicating the previously stored class of POIs or POIs, e.g., by displaying them in a digital map or by verbal announcing approach of a POI by means of a speech output. Besides indicating the (class of) POI, the stored position may be implicitly (by simply positioning a symbol at the correct place in a digital map, for example) or expressly (by indicating relative or absolute distances and/or positions) indicated.

Consequently, the route guidance can be adapted to the individual needs and preferences of a user. Not only the comfort is improved but also traveling safety might be enhanced. For example, the beginning of a tempo limit zone can be indicated by means of an appropriately chosen or defined POI symbol. The symbol may be plain text.

The at least one class of points of interest and/or the at least one point of interest can be indicated by displaying symbols in a digital map or by announcing a an acoustic or verbal message. The displayed symbols may comprise plain text and may be generated or otherwise provided by a user. The symbols may comprise bitmaps, vector graphics or digital photographs or any combination thereof. If, in particular, symbols are used that are individually designed by a user the "look and feel" quality of the guidance method is greatly enhanced. The announcement is preferably performed acoustically but, alternatively, a readable text may be displayed to the user. A message previously recorded by a user may be announced.

In the above described examples for the guidance method the at least one class of points of interest and/or the at least one point of interest can be defined by a user. Thereby, the user is given even more freedom to customize the navigation aid by, e.g., defining a new class of POIs representing the domiciles of relatives.

According to another aspect the method for route guidance comprises indicating the at least one class of points of interest and/or the at least one point of interest, in particular, along the route, only if the at least one class of points of interest and/or at least one point of interest stored at or for at least one position of a route lies within a predetermined distance of a present position of the employed navigation system during a travel under route guidance.

The present invention also provides a computer program product, comprising one or more computer readable media having computer-executable instructions for performing the steps of the method described above, in particular, the indicating of the POls.

Additional features and advantages of the present invention will be described with reference to the drawings. In the description, reference is made to the accompanying figures that are meant to illustrate preferred embodiments of the invention. It is understood that such embodiments do not represent the full scope of the invention.

Figure 1 shows a flow chart illustrating the process of route guidance according to an example of the present invention including storing an actual position of a vehicle and a related POI at a first travel along a route and announcing a message referring to the POI when traveling the route a second time.

Figure 2 shows components of an example for the inventive navigation system comprising a database for storing actual positions and related thereto points of interest as well as a symbol database for storing symbols indicating points of interest.

Figure 3 illustrates a detailed example for the route guidance including the individually customized verbal announcements of points of interest.

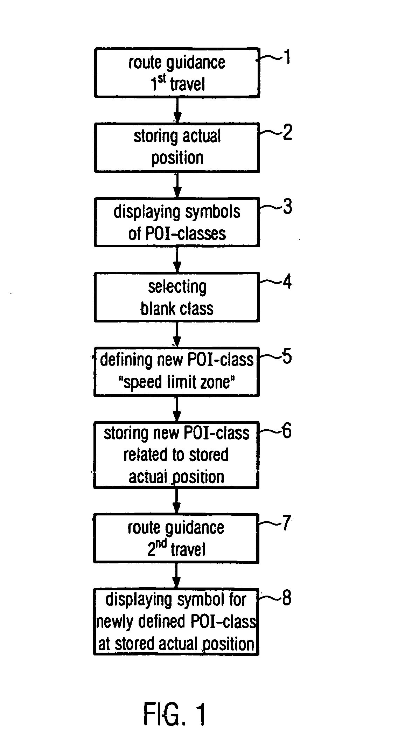

Figure 1 illustrates route guidance according to an example of the present invention. The of a vehicle travels along a route guided by a navigation system 1. During the travel the driver enters a speed limit zone that begins immediately behind a corner. The driver immediately pushes a position storage button to store the actual position 2 as determined by a location means that forms a part of the navigation system. Subsequently, symbols are shown on a display of the navigation system 3 that represent classes of points of interest (POls) as, e.g., service stations, hotels, etc. There is also a blank class entitled "New class". Since the driver cannot find a symbol indicating a speed limit zone, he selects 4 the displayed blank class, e.g., by means of a cursor or a touch screen button.

At the next red traffic light the driver has ample time to type a text as a symbol for the new class to be defined 5: "speed limit zone". Alternatively, the driver could have been presented a number of symbols not yet displayed in a step 3. In this case, the driver would choose one of the presented symbols considered to be appropriate. In a database of the navigation system data representing the actual position and related thereto data representing the new symbol for the newly introduced class of POls are stored 6.

The next time the driver travels the same route as at the first time route guidance is again carried out 7. The route to be taken is displayed in a digital map. Different from the display during the previous route guidance, this time at the position corresponding to the stored actual position, i.e. the coordinates, of the beginning of the speed limit zone, the symbol for the class of POls "speed limit zone" that was newly generated 5 at the first travel is displayed 8, e.g. the text "speed limit zone". Thereby, the driver can realize/remember that he is approaching a speed limit zone that begins shortly after the respective curve.

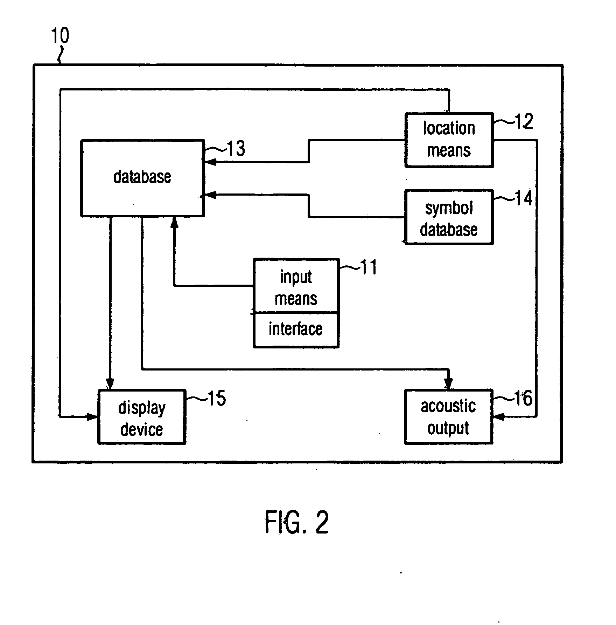

Components of an example of the navigation system disclosed in this application are illustrated in Fig. 2. The navigation system 10 comprises an input means 11 that can be operated by a user and that stores an actual position determined by a location means 12 on demand by the user in a database 13. The input means 11 comprises a user interface that includes haptic and acoustic input means. By means of the user interface the user is enabled to select a symbol stored in a symbol database 14. The symbol or a link to the symbol is stored together with and related to the actual position data, i.e. the coordinates of the actual position, in the database 13.

The navigation system 10 also comprises a display device 15 that displays a digital map including symbols representing POIs at the actual positions at which they are introduced to the system by the user. Moreover, a speech output 16 configured to output synthetic speech is included in the navigation system 10. In fact, the display device 15 and the speech output 16 can be controlled to indicate one or more POls stored in the database 12 in dependence on the present location of the vehicle that, in general, is different from the previously stored actual position.

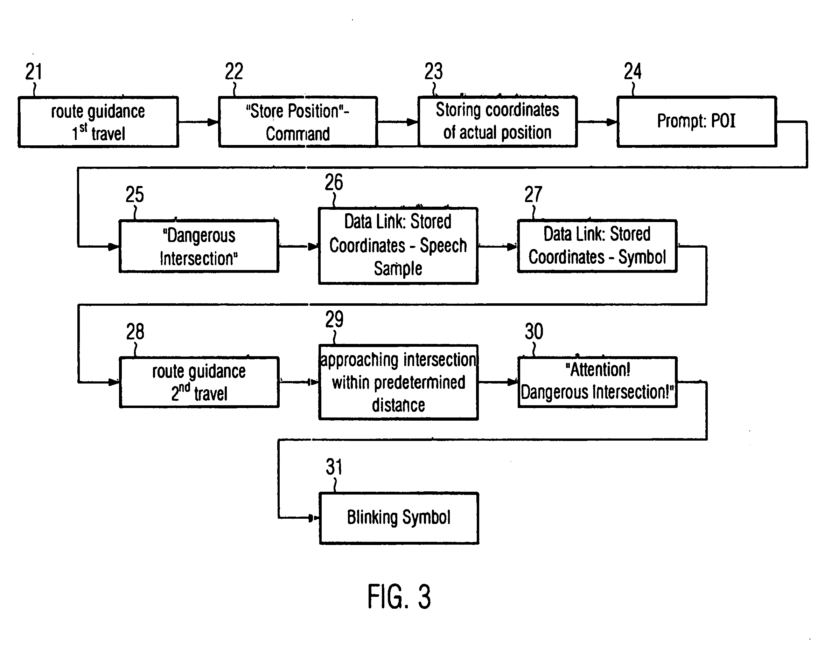

With reference to Figure 3 an example of the inventive guidance method is described in the following in some detail. A driver of an automobile is traveling under route guidance 21 by a vehicle navigation system (see also Figure 2). After some time the driver arrives at an intersection he presently considers dangerous. He presses a push-to-talk button and utters "Store position !" 22. The actual position of the automobile, in form of appropriate coordinates, e.g., geographic coordinates or coordinates of the digital map, as determined by a location means being part of the navigation system is stored in a database 23. The speech recognition system included in the navigation system may output 24 "Position stored. Point of Interest ?" Alternatively, the driver may be prompted to input a POI by means of a keyboard or a cursor usable to select from a list of symbols representing POIs that is displayed on a display device 24.

The driver utters 25 "Dangerous Intersection". By this utterance a data link is generated / stored linking the stored coordinate data to a speech sample in a library used by the speech recognition system 26. The speech sample may be "Attention! Dangerous Intersection!" Furthermore, a user generated symbol intended to represent dangerous intersections is loaded in the database in which the coordinates are stored and linked 27 to the data representing these coordinates. Alternatively, a data link is generated / stored linking the stored coordinate data to the user generated symbol that is stored in a separate symbol database 27. The symbol may be previously generated by the user, e.g., from a digital photograph or by modification of a downloaded vector graphic.

Now assume that the driver is traveling along the same route at a latter time again guided by the navigation system 28. When he approaches the above mentioned intersection within a predetermined distance 29, the speech recognition system is activated and a synthetic speech output is made 30: "Attention! Dangerous Intersection!"

With the help of a location means included in the navigation system the actual distance to the position stored for the above mentioned POI in step 22, i.e. the intersection, can continuously be determined during the travel. When a predetermined distance, which may be pre-selected by the driver, is reached, the warning announcement is made 30. It may also be preferred that the distance is announced to the driver, e.g., "Attention! Dangerous Intersection! 100 meters". The speech recognition system may be configured such that a speech sample can be recorded from an utterance by the driver himself and then stored for a subsequent output.

in this example, route guidance is performed acoustically and also visually by displaying a digital map including the present position of the vehicle and indicating the route to be taken. The digital map includes symbols for classes of POIs and for individual POIs. In particular, in the given example the digital map includes the symbol individually customized by the user. This symbol is shown at the position in the map that corresponds to the coordinates stored in step 23. Thus, the driver is informed about the dangerous intersection by inspection of the displayed digital map. Moreover, it might be envisioned that the symbol is blinking when the automobile reaches the intersection within a predetermined distance.

Whereas the above detailed description relates to vehicle navigation systems it is obvious that the present invention may also be incorporated in a handheld navigator.

## Claims

1. A navigation system (10), comprising
a location means (12) configured to determine an actual position;
a database (13);
an input means (11) configured to store the actual position, to assign at least one class of points of interest and/or at least one point of interest to the actual position and to store the at least one class of points of interest and/or at least one point of interest assigned to the actual position in the database (13); and
output means (15,16) configured to output the stored actual position and/or the stored at least one class of points of interest and/or at least one point of interest related to the stored actual position.

2. The navigation system (10) according to claim 1, wherein the input means (11) comprises a haptic and/or acoustic input means (11) configured to enable a user to initiate storing of the coordinates of the actual position and/or to select at least one class of points of interest and/or at least one point of interest related to the actual position.

3. The navigation system (10) according to claim 1 or 2, further comprising a speech recognition means that is configured to detect a speech input and to cause the input means (11) to store the actual position and at least one class of points of interest and/or at least one point of interest related to the actual position in the database (13), if a particular speech input is detected.

4. The navigation system (10) according to one of the preceding claims, wherein the output means (15, 16) is configured to output the stored actual position and the stored at least one class of points of interest and/or at least one point of interest related to the actual position by displaying a symbol for a class of points of interest or of a point of interest in a digital map at a position given by stored coordinates of the stored position.

5. The navigation system (10) according to one of the preceding claims, comprising a symbol database (14) configured to store at least one symbol for at least one class of points of interest and/or at least one point of interest and configured to be amended by insertion of a new symbol and/or deletion and/or modification of a stored symbol and wherein the output means (15, 16) is configured to output the stored at least one class of points of interest and/or at least one point of interest by means of the least one symbol stored in the symbol database (14).

6. The navigation system (10) according to claim 5, wherein at least one symbol stored in the database (13) comprises a digital photograph and/or a bitmap and/or a vector graphic.

7. The navigation system (10) according to one of the preceding claims, wherein the output means (15, 16) is configured to output the stored actual position and/or the stored at least one class of points of interest and/or at least one point of interest related to the actual position by an acoustic message, in particular, by a acoustic verbal message.

8. The navigation system (10) according to claim 7, wherein the acoustic message is a verbal message previously recorded by a user.

9. The navigation system (10) according to one of the preceding claims, wherein the at least one class of points of interest and/or the at least one point of interest are defined by a user.

10. The navigation system (10) according to one of the preceding claims, wherein the output means (15, 16) is configured to output the stored actual position and/or the stored at least one class of points of interest and/or at least one point of interest related to the stored actual position, only if the navigation system (10) is within a predetermined distance from the stored actual position.

11. The navigation system (10) according to one of the preceding claims, wherein
the input means (11) is configured to store an arbitrary position and at least one class of points of interest and/or at least one point of interest related to the arbitrary position in the database (13); and
the output means (15, 16) is configured to output the stored arbitrary position and/or the stored at least one class of points of interest and/or at least one point of interest related to the stored arbitrary position.

12. The navigation system (10) according to one of the preceding claims, wherein the navigation system (10) is a handheld navigation system (10) or a vehicle navigation system (10).

13. Method for route guidance, comprising the steps:
indicating a route to a predetermined destination; and
indicating at least one stored class of points of interest and/or at least one stored point of interest; wherein
the at least one class of points of interest and/or the at least one point of interest have been assigned to and stored at or for at least one position of the route during a previous travel along the route.

14. The method according to claim 13, wherein the at least one class of points of interest and/or the at least one point of interest are indicated by displaying symbols in a digital map.

15. The method according to claim 14, wherein the displayed symbols are symbols provided by a user and/or comprise a digital photograph and/or a bitmap and/or a vector graphic.

16. The method according to claim 13 or 14, wherein the at least one class of points of interest and/or the at least one point of interest are indicated by announcing an acoustic message, in particular, an acoustic verbal message.

17. The method according to one of the preceding claims, wherein the at least one class of points of interest and/or the at least one point of interest are defined by a user.

18. The method according to one of the preceding claims, herein the at least one class of points of interest and/or the at least one point of interest are indicated, only if the at least one class of points of interest and/or at least one point of interest stored at or for the at least one position of the route lies within a predetermined distance of a present position.

19. Computer program product, comprising one or more computer readable media having computer-executable instructions for performing the steps of the method according to one of the claims 13-18.

## Patentansprüche

1. Ein Navigationssystem (10), das umfasst
eine Ortsbestimmungseinrichtung (12), die dazu ausgebildet ist, eine aktuelle Position zu bestimmen;
eine Datenbank (13);
eine Eingabeeinrichtung (11), die dazu ausgebildet ist, die aktuelle Position zu speichern, zumindest eine Klasse von Punkten von Interesse und/oder zumindest einen Punkt von Interesse der aktuellen Position zuzuweisen und die zumindest eine Klasse von Punkten von Interesse und/oder den zumindest einen Punkt von Interesse, die oder der der aktuellen Position zugewiesen ist, in der Datenbank (13) zu speichern; und
eine Ausgabeeinrichtung (15, 16), die dazu ausgebildet ist, die gespeicherte aktuelle Position und/oder die gespeicherte zumindest eine Klasse von Punkten von Interesse und/oder zumindest einen Punkt von Interesse mit Bezug auf die gespeicherte aktuelle Position auszugeben.

2. Das Navigationssystem (10) gemäß Anspruch 1, in dem die Eingabeeinrichtung (11) eine haptische und/oder akustische Eingabeeinrichtung (11) umfasst, die dazu ausgebildet ist, es einem Nutzer zu ermöglichen, das Speichern der Koordinaten der aktuellen Position und/oder das Auswählen zumindest einer Klasse von Punkten von Interesse und/oder zumindest eines Punkts von Interesse mit Bezug auf die aktuelle Position zu initiieren.

3. Das Navigationssystem (10) gemäß Anspruch 1 oder 2, das weiterhin eine Spracherkennungseinrichtung umfasst, die dazu ausgebildet ist, eine Spracheingabe zu erkennen und die Eingabeeinrichtung (11) dazu zu veranlassen, die aktuelle Position und zumindest eine Klasse von Punkten von Interesse und/oder zumindest einen Punkt von Interesse mit Bezug auf die aktuelle Position in der Datenbank (13) zu speichern, wenn eine bestimmte Spracheingabe erkannt wird.

4. Das Navigationssystem (10) gemäß einem der vorhergehenden Ansprüche, in dem die Ausgabeeinrichtung (15, 16) dazu ausgebildet ist, die gespeicherte aktuelle Position auszugeben und zumindest eine Klasse von Punkten von Interesse und/oder zumindest einen Punkt von Interesse mit Bezug auf die aktuelle Position durch Anzeigen eines Symbols für eine Klasse von Punkten von Interesse oder einen Punkt von Interesse in einer digitalen Karte an einer Position, die durch die gespeicherten Koordinaten der gespeicherten Position gegeben ist, auszugeben.

5. Das Navigationssystem (10) gemäß einem der vorhergehenden Ansprüche, das eine Symboldatenbank (14) umfasst, die dazu ausgebildet ist, zumindest ein Symbol für zumindest eine Klasse von Punkten von Interesse und/oder zumindest einen Punkt von Interesse zu speichern, und die dazu ausgebildet, durch Eingabe eines neuen Symbols und/oder Löschen und/oder Ändern eines gespeicherten Symbols geändert zu werden, und in dem die Ausgabeeinrichtung (15, 16) dazu ausgebildet ist, die gespeicherte zumindest eine Klasse von Punkten von Interesse und/oder den zumindest einen Punkt von Interesse mithilfe des zumindest einen Symbols, das in der Symboldatenbank (14) gespeichert ist, auszugeben.

6. Das Navigationssystem (10) gemäß Anspruch 5, in dem zumindest ein Symbol, das in der Datenbank (13) gespeichert ist, ein digitales Foto und/oder ein Bitmap und/oder eine Vektorgrafik umfasst.

7. Das Navigationssystem (10) gemäß einem der vorhergehenden Ansprüche, in dem die Ausgabeeinrichtung (15, 16) dazu ausgebildet ist, die gespeicherte aktuelle Position und/oder die gespeicherte zumindest eine Klasse von Punkten von Interesse und/oder den zumindest einen Punkt von Interesse mit Bezug auf die aktuelle Position durch eine akustische Nachricht, insbesondere durch eine akustische Sprachnachricht, auszugeben.

8. Das Navigationssystem (10) gemäß Anspruch 7, in dem die akustische Nachricht eine Sprachnachricht ist, die zuvor von einem Nutzer aufgenommen worden ist.

9. Das Navigationssystem (10) gemäß einem der vorhergehenden Ansprüche, in dem die zumindest eine Klasse von Punkten von Interesse und/oder der zumindest eine Punkt von Interesse durch einen Nutzer definiert werden.

10. Das Navigationssystem (10) gemäß einem der vorhergehenden Ansprüche, in dem die Ausgabeeinrichtung (15, 16) dazu ausgebildet ist, die gespeicherte aktuelle Position und/oder die gespeicherte zumindest eine Klasse von Punkten von Interesse und/oder zumindest einen Punkt von Interesse mit Bezug auf die gespeicherte aktuelle Position nur dann auszugeben, wenn sich das Navigationssystem (10) innerhalb eines vorbestimmten Abstands von der gespeicherten aktuellen Position befindet.

11. Das Navigationssystem (10) gemäß einem der vorhergehenden Ansprüche, in dem
die Eingabeeinrichtung (11) dazu ausgebildet ist, eine beliebige Position und zumindest eine Klasse von Punkten von Interesse und/oder zumindest einen Punkt von Interesse mit Bezug auf die beliebige Position in der Datenbank (13) zu speichern; und
die Ausgabeeinrichtung (15, 16) dazu ausgebildet ist, die gespeicherte beliebige Position und/oder die gespeicherte zumindest eine Klasse von Punkten von Interesse und/oder zumindest einen Punkt von Interesse mit Bezug auf die beliebige Position auszugeben.

12. Das Navigationssystem (10) gemäß einem der vorhergehenden Ansprüche, in dem das Navigationssystem (10) ein Handnavigationssystem (10) oder ein Fahrzeugnavigationssystem (10) ist.

13. Verfahren zur Routenführung, das die Schritte umfasst:
Angeben einer Route zu einem vorbestimmten Ziel; und
Angeben von zumindest einer gespeicherten Klasse von Punkten von Interesse und/oder von zumindest einem gespeicherten Punkt von Interesse; wobei
die zumindest eine Klasse von Punkten von Interesse und/oder der zumindest eine Punkt von Interesse zumindest einer Position der Route während einer vorherigen Fahrt entlang der Route zugewiesen worden ist und an jener gespeichert worden ist.

14. Das Verfahren gemäß Anspruch 13, in dem die zumindest eine Klasse von Punkten von Interesse und/oder der zumindest eine Punkt von Interesse durch Anzeigen von Symbolen in einer digitalen Karte angezeigt werden.

15. Das Verfahren gemäß Anspruch 14, in dem die angezeigten Symbole Symbole sind, die von einem Nutzer bereitgestellt werden, und/oder ein digitales Foto und/oder ein Bitmap und/oder eine Vektorgrafik umfassen.

16. Das Verfahren gemäß Anspruch 13 oder 14, in dem die zumindest eine Klasse von Punkten von Interesse und/oder der zumindest eine Punkt von Interesse durch Ausgeben einer akustischen Nachricht, insbesondere einer akustischen Sprachnachricht, angegeben werden.

17. Das Verfahren gemäß einem der vorhergehenden Ansprüche, in dem die zumindest eine Klasse von Punkten von Interesse und/oder der zumindest eine Punkt von Interesse durch einen Nutzer definiert werden.

18. Das Verfahren gemäß einem der vorhergehenden Ansprüche, in dem die zumindest eine Klasse von Punkten von Interesse und/oder der zumindest eine Punkt von Interesse nur dann angegeben werden, wenn die zumindest eine Klasse von Punkten von Interesse und/oder der zumindest eine Punkt von Interesse, die an oder für zumindest eine Position der Route gespeichert sind, innerhalb eines vorbestimmten Abstands von einer gegenwärtigen Position liegen.

19. Computerprogrammprodukt, das ein oder mehrere computerlesbare Medien umfasst, die computerausführbare Anweisungen zum Ausführen der Schritte des Verfahrens gemäß einem der Ansprüche 13 -18 aufweisen.

## Revendications

1. Système de navigation (10), comprenant
un moyen de localisation (12) configuré afin de déterminer une position réelle ;
une base de données (13);
un moyen d'entrée (11) configuré afin de stocker la position réelle, afin d'attribuer au moins une catégorie de points d'intérêt et/ou au moins un point d'intérêt à la position réelle et de stocker la au moins une catégorie de points d'intérêt et/ou au moins un point d'intérêt attribué à la position réelle dans la base de données (13) ; et
un moyen de sortie (15, 16) configuré afin de fournir la position réelle stockée et/ou la au moins une catégorie de points d'intérêt stockée et/ou au moins un point d'intérêt lié à la position réelle stockée.

2. Système de navigation (10) selon la revendication 1, dans lequel le moyen d'entrée (11) comprend un moyen d'entrée haptique et/ou acoustique (11) configuré afin de permettre à un utilisateur de lancer le stockage des coordonnées de la position réelle et/ou de sélectionner au moins une catégorie de points d'intérêt et/ou au moins un point d'intérêt lié à la position réelle.

3. Système de navigation (10) selon la revendication 1 ou 2, comprenant en outre un moyen de reconnaissance de la parole qui est configuré afin de détecter une entrée de parole et de provoquer le fait que le moyen d'entrée (11) stocke la position réelle et au moins une catégorie de points d'intérêt et/ou au moins un point d'intérêt lié à la position réelle dans la base de données (13), si une entrée de parole particulière est détectée.

4. Système de navigation (10) selon l'une des revendications précédentes, dans lequel le moyen de sortie (15, 16) est configuré afin de fournir la position réelle stockée et au moins la catégorie de points d'intérêt stockée et/ou au moins un point d'intérêt lié à la position réelle en affichant un symbole pour une catégorie de points d'intérêt ou un point d'intérêt sur une carte numérique à un emplacement donné par les coordonnées stockées de la position stockée.

5. Système de navigation (10) selon l'une des revendications précédentes, comprenant une base de données de symboles (14) configurée afin de stocker au moins un symbole pour au moins une catégorie de points d'intérêt et/ou au moins un point d'intérêt et configurée afin d'être modifiée par l'insertion d'un nouveau symbole et/ou la suppression et/ou la modification d'un symbole stocké, et dans lequel le moyen de sortie (15, 16) est configuré afin de fournir au moins la catégorie de points d'intérêt stockée et/ou au moins un point d'intérêt à l'aide du symbole au moins stocké dans la base de données de symboles (14).

6. Système de navigation (10) selon la revendication 5, dans lequel au moins un symbole stocké dans la base de données (13) comprend une photographie numérique et/ou un bitmap et/ou un graphique vectoriel.

7. Système de navigation (10) selon l'une des revendications précédentes, dans lequel le moyen de sortie (15, 16) est configuré afin de fournir la position réelle stockée et/ou au moins la catégorie de points d'intérêt stockée et/ou au moins un point d'intérêt lié à la position réelle par un message acoustique, en particulier par un message acoustique verbal.

8. Système de navigation (10) selon la revendication 7, dans lequel le message acoustique est un message verbal enregistré au préalable par un utilisateur.

9. Système de navigation (10) selon l'une des revendications précédentes, dans lequel la catégorie de points d'intérêt au moins et/ou le point d'intérêt au moins est/sont défini(s) par un utilisateur.

10. Système de navigation (10) selon l'une des revendications précédentes, dans lequel le moyen de sortie (15, 16) est configuré afin de fournir la position réelle stockée et/ou la au moins une catégorie de points d'intérêt stockée et/ou le au moins un point d'intérêt stocké lié à la position réelle, uniquement si le système de navigation (10) se situe à une distance prédéterminée de la position réelle stockée.

11. Système de navigation (10) selon l'une des revendications précédentes, dans lequel
le moyen d'entrée (11) est configuré afin de stocker une position arbitraire et au moins une catégorie de points d'intérêt et/ou au moins un point d'intérêt lié à la position arbitraire dans la base de données (13) ; et
le moyen de sortie (15, 16) est configuré afin de fournir la position arbitraire stockée et/ou la au moins une catégorie de points d'intérêt stockée et/ou le au moins un point d'intérêt stocké lié à la position arbitraire.

12. Système de navigation (10) selon l'une des revendications précédentes, dans lequel le système de navigation (10) est un système de navigation portatif (10) ou un système de navigation de véhicule (10).

13. Procédé de guidage d'itinéraire, comprenant les étapes consistant à :
indiquer un itinéraire vers une destination prédéterminée ; et
indiquer au moins une catégorie de points d'intérêt stockée et/ou au moins un point d'intérêt stocké ; dans lequel
la au moins une catégorie de points d'intérêt et/ou le au moins un point d'intérêt a/ont été attribué(es) à et stocké(es) au niveau de ou pour au moins une position de l'itinéraire pendant un déplacement antérieur sur l'itinéraire.

14. Procédé selon la revendication 13, dans lequel la moins une catégorie de points d'intérêt et/ou le au moins un point d'intérêt est/sont indiqué(es) en affichant des symboles sur une carte numérique.

15. Procédé selon la revendication 14, dans lequel les symboles affichés sont des symboles fournis par un utilisateur et/ou comprennent une photographie numérique et/ou un bitmap et/ou un graphique vectoriel.

16. Procédé selon la revendication 13 ou 14, dans lequel la au moins une catégorie de points d'intérêt et/ou le au moins un point d'intérêt est/sont indiqué(es) en annonçant un message acoustique, en particulier un message acoustique verbal.

17. Procédé selon l'une des revendications précédentes, dans lequel la au moins une catégorie de points d'intérêt et/ou le au moins un point d'intérêt est/sont défini(es) par un utilisateur.

18. Procédé selon l'une des revendications précédentes, dans lequel la au moins une catégorie de points d'intérêt et/ou le au moins un point d'intérêt est/sont indiqué(es), uniquement si la au moins une catégorie de points d'intérêt et/ou le au moins un point d'intérêt stocké(e) au niveau de ou pour au moins une position de l'itinéraire se trouve(nt) à une distance prédéterminée d'une position actuelle.

19. Produit de programme informatique, comprenant un ou plusieurs support(s) lisible(s) par ordinateur ayant des instructions exécutables par un ordinateur permettant d'effectuer les étapes du procédé selon l'une des revendications 13 à 18.
